# EUROPEAN PATENT APPLICATION

(11) **EP 4 660 997 A1**
(43) Date of publication of application: **10.12.2025**
(21) Application number: 24214198.4
(22) Date of filing: 20.11.2024
(51) Int. Cl.: G10L 17/00, H04L 65/403, H04M 3/56, H04L 12/18

(54) **INFORMATION PROCESSING SYSTEM, OPERATION DEVICE, AND PROGRAM**

(30) Priority: 05.06.2024 JP 2024091551
(71) Applicant: FUJIFILM Business Innovation Corp., Minato-ku Tokyo (JP)
(72) Inventor: SASAKI, Hirotake, Ebina-shi, Kanagawa (JP); IKEDA, Nanaka, Ebina-shi, Kanagawa (JP); MAEKAWA, Shinichi, Yokohama-shi, Kanagawa (JP); TAKEUCHI, Ko, Yokohama-shi, Kanagawa (JP); SUDO, Masami, Yokohama-shi, Kanagawa (JP); NIMIYA, Hiroshi, Yokohama-shi, Kanagawa (JP); YOSHIDA, Arisa, Yokohama-shi, Kanagawa (JP); EGAWA, Satoshi, Yokohama-shi, Kanagawa (JP); USAMI, Yukiko, Yokohama-shi, Kanagawa (JP); NISHIKAWA, Masaki, Yokohama-shi, Kanagawa (JP)
(74) Representative: Kurig, Thomas

(57) **Abstract**

An information processing system includes a processor configured to acquire operation information of an operation device that is configured such that each of plural candidates who possibly make an utterance is selectable and that is operated by a selector in a case where the selector selects an utterer from among the plural candidates, specify the utterer from among the plural candidates based on the acquired operation information, and associate the specified utterer with an utterance that is made in a case where the operation device is operated by the selector.

## Description

### BACKGROUND OF THE INVENTION

### (i) Field of the Invention

The present invention relates to an information processing system, an operation device, and a program.

### (ii) Description of Related Art

Disclosed in JP2018-174439A is a meeting support system that includes terminals respectively used by a plurality of meeting participants and a meeting support device. Each of the terminals includes an operation portion used to set to make an utterance and a self utterance notification unit that notifies the other terminals of information indicating that an utterance will be made.

Disclosed in JP2024-027122A is a process of generating a map image in which information related to the content of a voice is disposed at a position corresponding to a direction toward a sound source of the voice with respect to a multi-microphone device and displaying the map image on a display unit of a display device.

Disclosed in JP2022-015775A is a process of managing a marking operation of applying an individual mark in relation to a voice according to a timeline and associating the voice and the marking operation with each other on the same timeline.

### SUMMARY OF THE INVENTION

In a case where a process of associating an utterance with an utterer who has made the utterance is performed, it is possible to specify who has made the utterance.

Here, specifying an utterance and an utterer can be performed based on a declaration for the utterance, the declaration being made by the utterer himself or herself.

Incidentally, an utterer tends to concentrate on an utterance made by the utterer himself or herself. In this case, the utterer may forget to make a declaration for the utterance and the timing of the declaration may be different from the timing of the utterance. In this case, the precision of an association between the utterance and the utterer associated with the utterance is low.

An object of the present invention is to increase the precision of an association between an utterance and an utterer associated with the utterance in comparison with a case where each of a plurality of candidates who possibly make an utterance operates an operation device of himself or herself to make a declaration for the utterance himself or herself.

According to a first aspect of the present disclosure, there is provided an information processing system including a processor configured to acquire operation information of an operation device that is configured such that each of a plurality of candidates who possibly make an utterance is selectable and that is operated by a selector in a case where the selector selects an utterer from among the plurality of candidates, specify the utterer from among the plurality of candidates based on the acquired operation information, and associate the specified utterer with an utterance that is made in a case where the operation device is operated by the selector.

According to a second aspect of the present disclosure, in the information processing system according to the first aspect, the processor may be configured to acquire, as the operation information, orientation information which is information indicating an orientation of the operation device operated by the selector or an orientation of a movable portion provided at the operation device, specify the utterer based on the orientation information, and associate the specified utterer with an utterance that is made in a case where the operation device or the movable portion faces a direction specified by the orientation information used for the specification of the utterer.

According to a third aspect of the present disclosure, the information processing system according to the second aspect, may further include a storage unit that stores orientations of the operation device or orientations of the movable portion in a state where the orientations are respectively associated with the candidates and the processor may be configured to specify the utterer based on the orientation specified by the acquired orientation information and information stored in the storage unit.

According to a fourth aspect of the present disclosure, in the information processing system according to the second or third aspect, the processor may be configured to acquire, as the orientation information, information about the orientation of the operation device or the orientation of the movable portion in a case where a movement speed of the operation device or the movable portion is lower than a predetermined movement speed.

According to a fifth aspect of the present disclosure, in the information processing system according to the second to fourth aspect, the processor may be configured to specify another utterer whose position in a direction around a vertical axis is different from a position of the utterer, in a case where the operation device or the movable portion is rotated around the vertical axis and the orientation of the operation device or the movable portion is changed after the utterer is specified.

According to a sixth aspect of the present disclosure, in the information processing system according to any one of the second to fifth aspects, the processor may be configured to specify another utterer who is positioned closer to the operation device or the movable portion than the utterer is or another utterer who is positioned farther from the operation device or the movable portion than the utterer is, in a case where the operation device or the movable portion is rotated around a horizontal axis and the orientation of the operation device or the movable portion is changed after the utterer is specified.

According to a seventh aspect of the present disclosure, in the information processing system according to any one of the second to fifth aspects, the processor may be configured to specify another utterer who is positioned above or below the utterer, in a case where the operation device or the movable portion is rotated around a horizontal axis and the orientation of the operation device or the movable portion is changed after the utterer is specified.

According to an eighth aspect of the present disclosure, in the information processing system according to the first aspect, the processor may be configured to acquire, as the operation information, information about an operation of making a selection from buttons that respectively correspond to the plurality of candidates and that are provided at the operation device, specify the utterer based on a selected button which is a button selected from among a plurality of buttons by the selector, and associate the specified utterer with an utterance that is made in a case where the selected button is selected by the selector.

According to a ninth aspect of the present disclosure, in the information processing system according to any one of the first to eighth aspects, operations that are performed on the operation device by the selector and the candidates may be respectively associated with each other, and the processor may be configured to further generate control information that causes the selector to be notified of candidate information, which is information about a candidate who is associated with an operation performed on the operation device by the selector, via the operation device.

According to a tenth aspect of the present disclosure, in the information processing system according to the ninth aspect, the candidate information may be displayed on a display unit of the operation device, and the processor may be configured to further generate control information that causes a display on a non-display portion, which is a portion other than a display portion of the display unit on which the candidate information is displayed, to be changed each time the candidate information that the selector is notified of via the display unit is made different.

According to an eleventh aspect of the present disclosure, in the information processing system according to the tenth aspect, the processor may be configured to generate, as the control information that causes the display on the non-display portion to be changed, control information that causes a background color of the non-display portion to be changed.

According to a twelfth aspect of the present disclosure, there is provided an operation device that is configured such that each of a plurality of candidates who possibly make an utterance is selectable and that is used in a case where a selector selects an utterer, the operation device including a processor configured to acquire operation information of the operation device that is operated in a case where the selector selects the utterer from among the plurality of candidates and specify the utterer from among the plurality of candidates based on the operation information.

According to a thirteenth aspect of the present disclosure, in the operation device according to the twelfth aspect, the processor may be configured to acquire, as the operation information, operation information of an operation of changing an orientation of the operation device or operation information of an operation of changing an orientation of a movable portion provided at the operation device.

According to a fourteenth aspect of the present disclosure, in the operation device according to the twelfth or thirteenth aspect, operations that are performed on the operation device by the selector and the candidates may be respectively associated with each other, and the processor may be configured to further generate control information that causes the selector to be notified of candidate information, which is information about a candidate who is associated with an operation performed on the operation device by the selector, via the operation device.

According to a fifteenth aspect of the present disclosure, there is provided a program causing a computer to realize an acquiring function of acquiring operation information of an operation device that is configured such that each of a plurality of candidates who possibly make an utterance is selectable and that is operated by a selector in a case where the selector selects an utterer from among the plurality of candidates, a specifying function of specifying the utterer from among the plurality of candidates based on the operation information, and an associating function of associating the specified utterer with an utterance that is made in a case where the operation device is operated by the selector.

According to a sixteenth aspect of the present disclosure, there is provided a program that is executed by a computer provided in an operation device that is configured such that each of a plurality of candidates who possibly make an utterance is selectable and that is used in a case where a selector selects an utterer, the program causing the computer to realize an acquiring function of acquiring operation information of the operation device that is operated by a selector in a case where the selector selects an utterer from among the plurality of candidates and a specifying function of specifying the utterer from among the plurality of candidates based on the operation information.

According to the first aspect of the present disclosure, it is possible to increase the precision of an association between an utterance and an utterer associated with the utterance in comparison with a case where each of a plurality of candidates who possibly make an utterance operates an operation device of himself or herself to make a declaration for the utterance himself or herself.

According to the second aspect of the present disclosure, it is possible to associate an utterer with an utterance based on an operation that is performed on the operation device of which the orientation can be changed at least partially.

According to the third aspect of the present disclosure, it is possible to associate an utterer with an utterance based on the information registered in advance in the storage unit.

According to the fourth aspect of the present disclosure, it is possible to increase the precision of an association between an utterance and an utterer associated with the utterance in comparison with a case where information about the orientation of the operation device or the orientation of the movable portion in a case where the movement speed thereof is higher than a predetermined movement speed is acquired as the orientation information.

According to the fifth aspect of the present disclosure, in a case where an operation of causing the operation device or the movable portion to perform rotation around the vertical axis is performed on the operation device or the movable portion, another utterer different from an utterer specified before the rotation can be specified.

According to the sixth aspect of the present disclosure, in a case where an operation of causing the operation device or the movable portion to perform rotation around the horizontal axis is performed on the operation device or the movable portion, another utterer who is positioned closer to the operation device or the movable portion than an utterer specified before the rotation is or another utterer who is positioned farther from the operation device or the movable portion than an utterer specified before the rotation is can be specified.

According to the seventh aspect of the present disclosure, in a case where an operation of causing the operation device or the movable portion to perform rotation around the horizontal axis is performed on the operation device or the movable portion, another utterer who is positioned above or below an utterer specified before the rotation can be specified.

According to the eighth aspect of the present disclosure, it is possible to associate an utterer with an utterance based on an operation performed on the operation device that includes the buttons provided to respectively correspond to the plurality of candidates.

According to the ninth aspect of the present disclosure, it is possible to notify the selector of information about a candidate who is specified based on an operation that is performed on the operation device by the selector.

According to the tenth aspect of the present disclosure, in comparison with a case where only a display regarding the candidate information is changed, it is possible to more clearly notify the selector of a change in information that the selector is notified of.

According to the eleventh aspect of the present disclosure, in comparison with a case where the background color of the non-display portion is not changed, it is possible to more clearly notify the selector of a change in information that the selector is notified of.

According to the twelfth aspect of the present disclosure, it is possible to increase the precision of an association between an utterance and an utterer associated with the utterance in comparison with a case where each of a plurality of candidates who possibly make an utterance operates an operation device of himself or herself to make a declaration for the utterance himself or herself.

According to the thirteenth aspect of the present disclosure, it is possible to associate an utterer with an utterance based on an operation that is performed on the operation device of which the orientation can be changed at least partially.

According to the fourteenth aspect of the present disclosure, it is possible to notify the selector of information about a candidate who is specified based on an operation that is performed on the operation device by the selector.

According to the fifteenth aspect of the present disclosure, it is possible to increase the precision of an association between an utterance and an utterer associated with the utterance in comparison with a case where each of a plurality of candidates who possibly make an utterance operates an operation device of himself or herself to make a declaration for the utterance himself or herself.

According to the sixteenth aspect of the present disclosure, it is possible to increase the precision of an association between an utterance and an utterer associated with the utterance in comparison with a case where each of a plurality of candidates who possibly make an utterance operates an operation device of himself or herself to make a declaration for the utterance himself or herself.

### BRIEF DESCRIPTION OF THE DRAWINGS

Exemplary embodiment(s) of the present invention will be described in detail based on the following figures, wherein:
Fig. 1 is a diagram showing an overall configuration of an information processing system;
Fig. 2 is a diagram showing a target person, nearby persons, and a selector;
Fig. 3 is a diagram showing a configuration of a management server;
Fig. 4 is a diagram showing a hardware configuration of a device;
Fig. 5 is a diagram showing a hardware configuration of an operation device;
Fig. 6 is a diagram showing an example of information stored in a storage unit of the operation device;
Parts (A) to (C) of Fig. 7 are diagrams showing a process of registering information in the storage unit of the operation device;
Fig. 8 is a flowchart showing a series of flows of the process shown in the parts (A) to (C) of Figs. 7;
Fig. 9 is a diagram showing a database stored in an information storage unit of the management server shown in Fig. 3;
Fig. 10 is a diagram showing information about an orientation acquired by a CPU of the operation device;
Parts (A) to (C) of Fig. 11 are diagrams showing an example of an operation performed on the operation device;
Figs. 12A and 12B are diagrams showing another processing example;
Figs. 13A and 13B are diagrams showing another processing example;
Fig. 14 is a diagram showing another configuration example of the operation device;
Fig. 15 is a diagram showing another configuration example of the operation device;
Fig. 16 is a diagram showing a modification example of the operation device; and
Parts (A) and (B) of Fig. 17 are diagrams showing the way in which a non-display portion is changed.

### DETAILED DESCRIPTION OF THE INVENTION

An exemplary embodiment of the present invention will be described below with reference to the accompanying drawings.

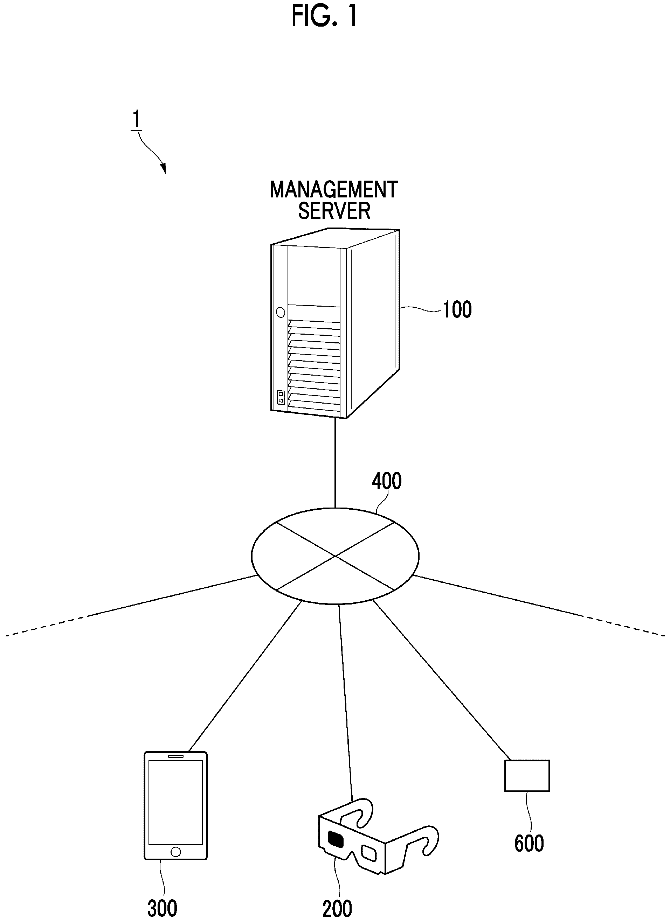

Fig. 1 is a diagram showing an overall configuration of an information processing system 1 according to the present exemplary embodiment.

The information processing system 1 is provided with a management server 100. Furthermore, the information processing system 1 is provided with devices 200 each of which is to be mounted on a target person, which will be described later.

Although only one device 200 is shown in Fig. 1, a plurality of devices 200 are provided in accordance with the number of target persons. The devices 200 are eyeglass-type devices 200. Each device 200 is mounted on the head of a target person. The target person visually recognizes the vicinity of the target person through the device 200.

In addition, the information processing system 1 is provided with a microphone 600 that acquires a voice of a nearby person, which will be described later. The microphone 600 acquires a voice of a nearby person and generates voice information.

Furthermore, an operation device 300 used to specify an utterer is provided.

In the present exemplary embodiment, a selector 43, which will be described later, selects an utterer. In a case where such selection is to be made by the selector 43, the selector 43 operates the operation device 300.

The devices 200 are connected to the management server 100 through a communication line 400, such as the Internet. In addition, the microphone 600 and the operation device 300 are also connected to the management server 100 through the communication line 400.

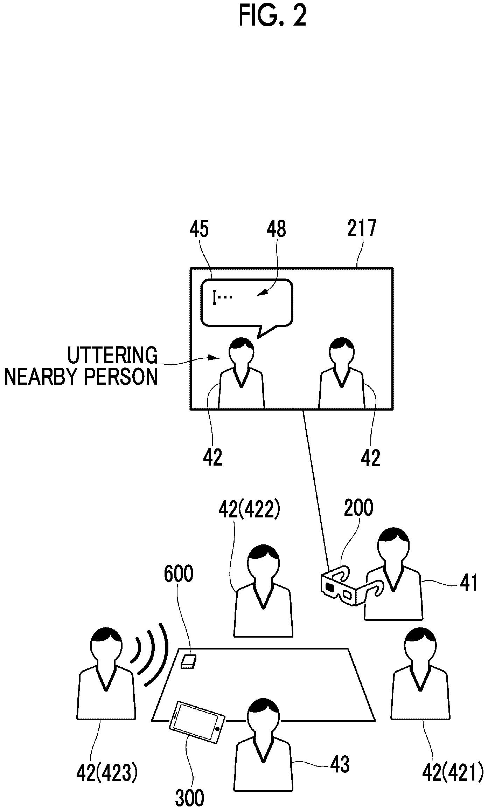

Fig. 2 is a diagram showing a target person 41, nearby persons 42, and the selector 43.

In the present exemplary embodiment, as described above, the device 200 is mounted on the target person 41.

A plurality of nearby persons 42 are positioned near the target person 41. Furthermore, the selector 43 who operates the operation device 300 is positioned near the target person 41.

The microphone 600 is installed on a desk.

In the present exemplary embodiment, the target person 41 is notified of utterance content 48, which is the content of an utterance of the nearby person 42, through the device 200.

The selector 43 operates the operation device 300 to select, from among the nearby persons 42, the nearby person 42 who has made an utterance. In the present exemplary embodiment, the target person 41 is notified of, through the device 200, the utterance content 48 of the nearby person 42 selected by the selector 43.

### [Description about Management Server]

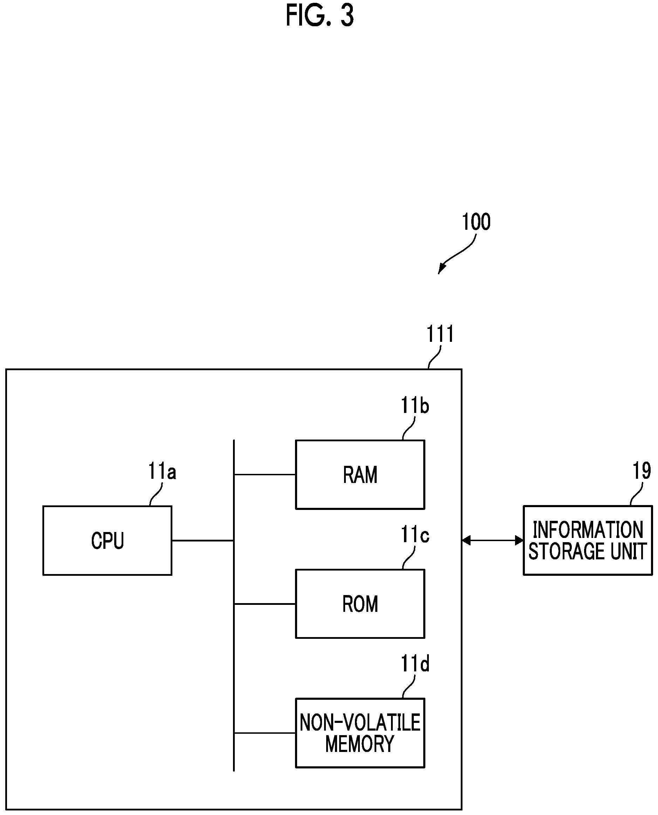

Fig. 3 is a diagram showing a configuration of the management server 100. The management server 100 is realized by a computer.

The management server 100 functioning as the information processing system 1 includes an arithmetic processing unit 111 that executes a digital arithmetic process according to a program. Furthermore, the management server 100 includes an information storage unit 19 that stores information.

The information storage unit 19 is realized by an existing information storage device. Specifically, the information storage unit 19 is realized by, for example, a hard disk drive (HDD). In addition, the information storage unit 19 is realized by, for example, a semiconductor memory.

The arithmetic processing unit 111 is provided with a CPU 11a which is an example of a processor.

In addition, the arithmetic processing unit 111 is provided with a RAM 11b that is used as a work memory or the like of the CPU 11a. In addition, the arithmetic processing unit 111 is provided with a ROM 11c in which a program and the like executed by the CPU 11a are stored.

In addition, the arithmetic processing unit 111 is provided with a non-volatile memory 11d that can hold data even in a case where power supply is interrupted.

The non-volatile memory 11d is composed of, for example, an SRAM or a flash memory that is backed up by a battery. The information storage unit 19 stores various types of information such as a program executed by the CPU 11a.

The CPU 11a provided in the arithmetic processing unit 111 reads a program stored in the ROM 11c or the information storage unit 19. Accordingly, various types of processing to be performed by the management server 100 are executed by the management server 100.

The program to be executed by the CPU 11a can be provided to the management server 100 in a state of being stored in a recording medium. This recording medium is a computer-readable recording medium.

Examples of the recording medium include a magnetic recording medium, such as a magnetic tape or a magnetic disk, and an optical recording medium, such as an optical disk. In addition, examples of the recording medium also include an optical magnetic recording medium and a semiconductor memory.

In addition, the program to be executed by the CPU 11a may be provided to the management server 100 by means of a communication unit. Examples of the communication unit include a communication unit that uses an Internet line.

### [Description about Device]

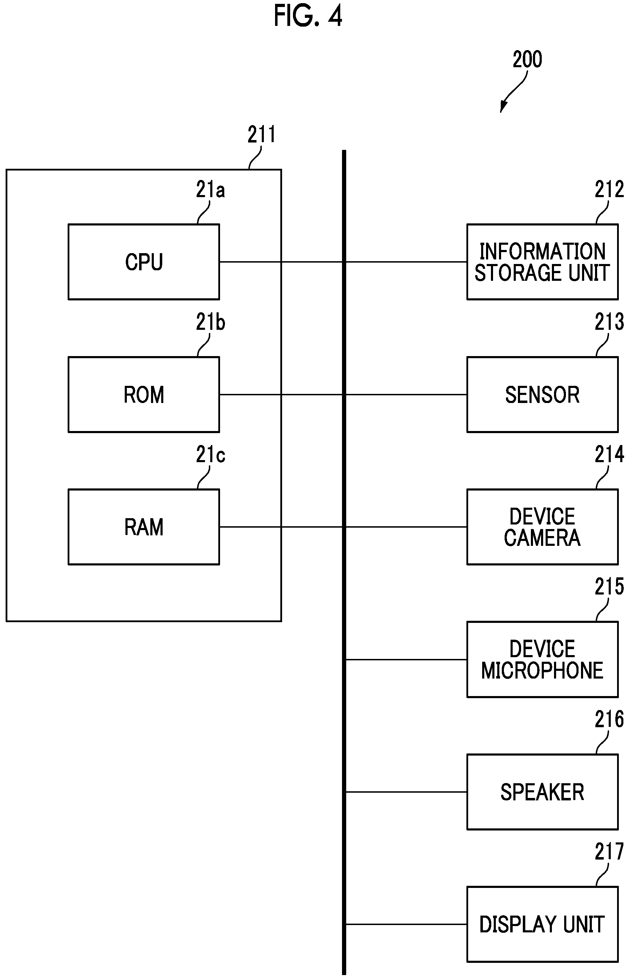

Fig. 4 is a diagram showing a hardware configuration of the device 200.

The device 200 includes an arithmetic processing unit 211, an information storage unit 212, a sensor 213, and a device camera 214. In addition, the device 200 further includes a device microphone 215, a speaker 216, and a display unit 217.

The arithmetic processing unit 211 is provided with a CPU 21a which is an example of a processor.

In addition, the arithmetic processing unit 211 is provided with a RAM 21c that is used as a work memory or the like of the CPU 21a. In addition, the arithmetic processing unit 211 is provided with a ROM 21b in which a program and the like executed by the CPU 21a are stored.

The information storage unit 212 is realized by an existing information storage device, such as a semiconductor memory.

Examples of the sensor 213 include a GPS, a gyro sensor, an acceleration sensor, and a direction sensor. It is possible to specify the current position of the device 200 or the orientation of the device 200 based on output from the sensor 213.

The device camera 214 is a camera that images the vicinity of the device 200.

The device camera 214 faces a front side ahead of the target person 41 in a state where the device 200 is mounted on the target person 41 and images the front side. In other words, the device camera 214 faces a side that the target person 41 faces and images the side ahead of the target person 41.

The device microphone 215 acquires a voice of the target person 41 and generates voice information.

The speaker 216 outputs sound or a voice and performs a notification process for the target person 41 on which the device 200 is mounted.

The display unit 217 is a so-called display and displays various kinds of information. The utterance content 48 shown in Fig. 2 is displayed on the display unit 217. The display unit 217 is disposed in front of the eyes of the target person 41 in a state where the device 200 is mounted on the target person 41.

There may be a case where the target person 41 is a hearing-impaired person. A hearing-impaired person can also specify the utterance content of the nearby person 42 in a case where the utterance content 48 is displayed.

A video obtained by the device camera 214 is displayed on the display unit 217. In a state where the device 200 is mounted on the target person 41, a video showing the state of a space ahead of the target person 41 is displayed on the display unit 217.

In the present exemplary embodiment, the target person 41 visually recognizes the space ahead of the target person 41 by referring to a video displayed on the display unit 217.

In addition, there is also a light-transmissive type device 200.

In this case, as the display unit 217, the display unit 217 that is transparent and through which the target person 41 can visually recognize a space behind the display unit 217 is installed.

The target person 41 visually recognizes the space behind the display unit 217 through the display unit 217. In other words, the target person 41 visually recognizes a space ahead of the target person 41 through the display unit 217.

In the case of the light-transmissive type device 200, an image is displayed on the display unit 217. A user visually recognizes both a real space behind the display unit 217 and the image displayed on the display unit 217.

The program to be executed by the CPU 21a can be provided to the device 200 in a state of being stored in a recording medium. This recording medium is a computer-readable recording medium.

As in the above-described exemplary embodiment, examples of the recording medium include a magnetic recording medium, such as a magnetic tape or a magnetic disk, and an optical recording medium, such as an optical disk. In addition, examples of the recording medium also include an optical magnetic recording medium and a semiconductor memory.

In addition, the program to be executed by the CPU 21a may be provided to the device 200 by means of a communication unit. Examples of the communication unit include a communication unit that uses an Internet line.

Note that the device 200 is not limited to an eyeglass-type device, and examples of the device 200 include a smartphone and a tablet terminal. All of the eyeglass-type device, the smartphone, the tablet terminal, and the like are devices that can be carried by the target person 41.

Each of the smartphone and the tablet terminal is also provided with a display unit and a device camera. In this case as well, the target person 41 can visually recognize the front space ahead of the target person 41 by referring to a video that is captured by the device camera and that is displayed on the display unit.

### [Description of Operation Device]

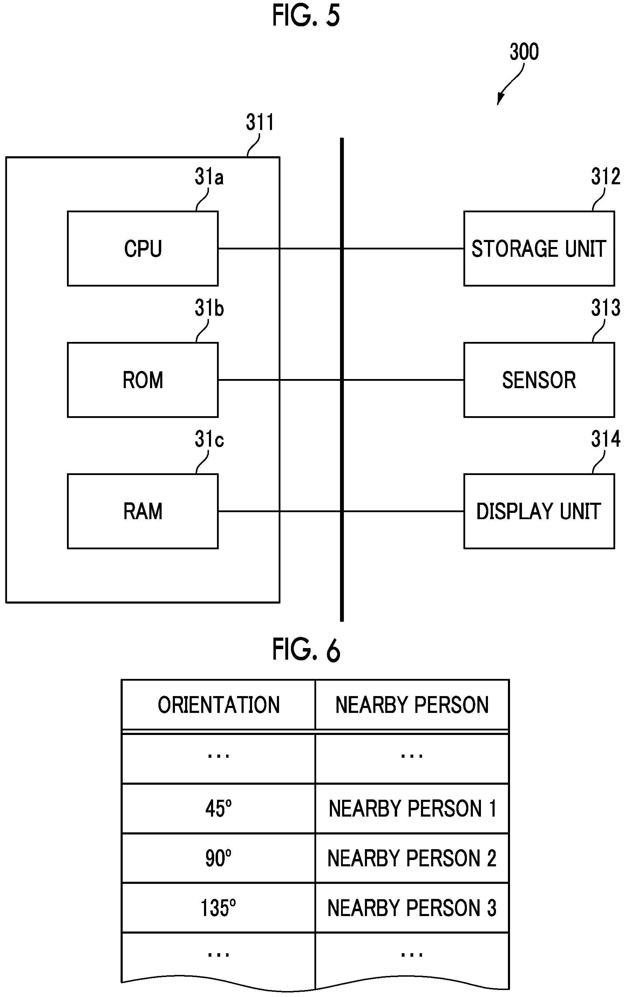

Fig. 5 is a diagram showing a hardware configuration of the operation device 300.

The operation device 300 includes an arithmetic processing unit 311, a storage unit 312, a sensor 313, and a display unit 314.

The arithmetic processing unit 311 is provided with a CPU 31a which is an example of a processor.

In addition, the arithmetic processing unit 311 is provided with a RAM 31c that is used as a work memory or the like of the CPU 31a. In addition, the arithmetic processing unit 311 is provided with a ROM 31b in which a program and the like executed by the CPU 31a are stored.

The storage unit 312 is realized by an existing information storage device, such as a semiconductor memory.

The storage unit 312 stores the orientations of the operation device 300 and candidates who possibly make an utterance in a state where the orientations of the operation device 300 and the candidates are respectively associated with each other. The candidates who possibly make an utterance are the above-described nearby persons 42. The storage unit 312 stores the orientations of the operation device 300 and the nearby persons 42 in a state where the orientations of the operation device 300 and the nearby persons 42 are respectively associated with each other.

Examples of the sensor 313 include a gyro sensor, a direction sensor, and an acceleration sensor. The CPU 31a of the operation device 300 specifies the orientation of the operation device 300 based on output from the sensor 313.

The display unit 314 is a so-called display and displays various kinds of information.

Fig. 6 is a diagram showing an example of information stored in the storage unit 312 of the operation device 300.

In the storage unit 312, the orientations of the operation device 300 and the nearby persons 42 are stored in a state where the orientations of the operation device 300 and the nearby persons 42 are respectively associated with each other.

The CPU 31a of the operation device 300 specifies an utterer based on the information stored in the storage unit 312.

The CPU 31a refers to the information stored in the storage unit 312 in response to an operation performed on the operation device 300. Then, the CPU 31a specifies the nearby person 42 who has made an utterance, from among the plurality of nearby persons 42 stored in the storage unit 312.

The CPU 31a specifies, based on the information stored in the storage unit 312, the nearby person 42 who has made the utterance.

The CPU 31a of the operation device 300 specifies an utterer from among candidates. The CPU 31a of the operation device 300 specifies, from among the nearby persons 42 who possibly make an utterance, the nearby person 42 who has actually made an utterance.

The details of the way in which the nearby person 42 who has made the utterance is specified will be described later.

### [Process of Registering Information in Storage Unit]

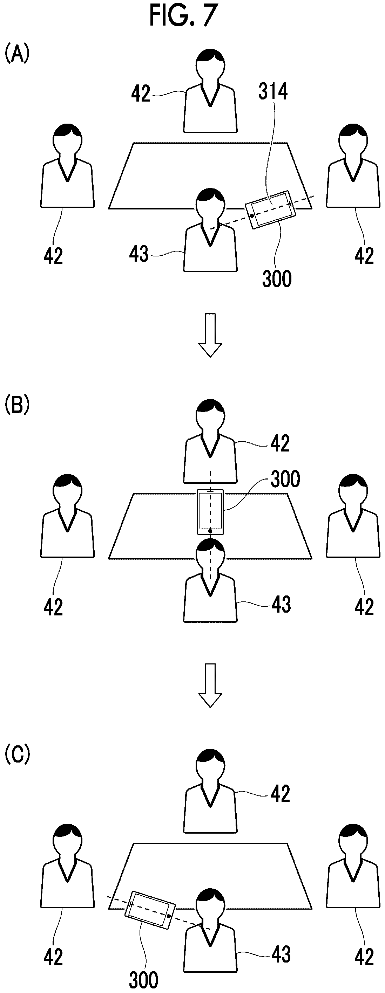

Parts (A) to (C) of Fig. 7 are diagrams showing a process of registering information in the storage unit 312 of the operation device 300.

As described above, in the storage unit 312, the orientations of the operation device 300 and the nearby persons 42 are stored in a state where the orientations of the operation device 300 and the nearby persons 42 are respectively associated with each other.

The information is registered in the storage unit 312 by, for example, the selector 43.

In the process of registering information, first, an operation as shown in the part (A) of Fig. 7 is performed. First, the selector 43 directs the operation device 300 toward the first nearby person 42 among the plurality of nearby persons 42.

Then, the selector 43 performs a predetermined operation of selecting an input button or the like, with respect to the operation device 300.

In response to this, the CPU 31a of the operation device 300 acquires information about the orientation of the operation device 300. The CPU 31a acquires the information about the orientation based on output from the sensor 313 (refer to Fig. 5) provided in the operation device 300.

Thereafter, the selector 43 operates the operation device 300 to input information about the first nearby person 42. Hereinafter, in the present specification, information about the nearby person 42 may be referred to as "nearby person information".

The selector 43 operates the operation device 300 to input the nearby person information of the first nearby person 42.

Specifically, the selector 43 inputs, as nearby person information, information such as the name of the nearby person 42. In response to this, the CPU 31a of the operation device 300 acquires the nearby person information.

Next, the CPU 31a of the operation device 300 associates the acquired information about the orientation with the acquired nearby person information. Next, the CPU 31a registers, in the storage unit 312, the information about the orientation and the nearby person information associated with each other.

Thereafter, through the display unit 314, the selector 43 is inquired whether or not registration of all of the nearby persons 42 is finished.

Here, a case where the registration is not finished and the operation device 300 is further operated by the selector 43 will be described.

Next, as shown in the part (B) of Fig. 7, the selector 43 directs the operation device 300 toward another nearby person 42 different from the first nearby person 42. The selector 43 directs the operation device 300 toward the second nearby person 42.

Then, the selector 43 performs a predetermined operation of selecting an input button or the like, with respect to the operation device 300. In response to this, the CPU 31a of the operation device 300 acquires information about the orientation of the operation device 300.

Furthermore, the selector 43 inputs the nearby person information of the second nearby person 42. In response to this, the CPU 31a of the operation device 300 acquires new nearby person information.

Then, the CPU 31a of the operation device 300 associates the acquired information about the orientation with the acquired nearby person information. Next, the CPU 31a of the operation device 300 registers, in the storage unit 312, the information about the orientation and the nearby person information associated with each other.

Thereafter, in this example, as shown in the part (C) of Fig. 7, the selector 43 directs the operation device 300 toward the third nearby person 42 who is the other nearby person 42.

Next, the selector 43 performs a predetermined operation of selecting an input button or the like, with respect to the operation device 300. In response to this, the CPU 31a of the operation device 300 acquires information about the orientation of the operation device 300.

Furthermore, the selector 43 inputs the nearby person information of the third nearby person 42. In response to this, the CPU 31a of the operation device 300 acquires new nearby person information.

Then, the CPU 31a of the operation device 300 associates the acquired information about the orientation with the acquired nearby person information. Next, the CPU 31a registers, in the storage unit 312, the information about the orientation and the nearby person information associated with each other.

As described above, in this example, the information about the orientation and the nearby person information for three nearby persons 42 are registered in the storage unit 312 of the operation device 300.

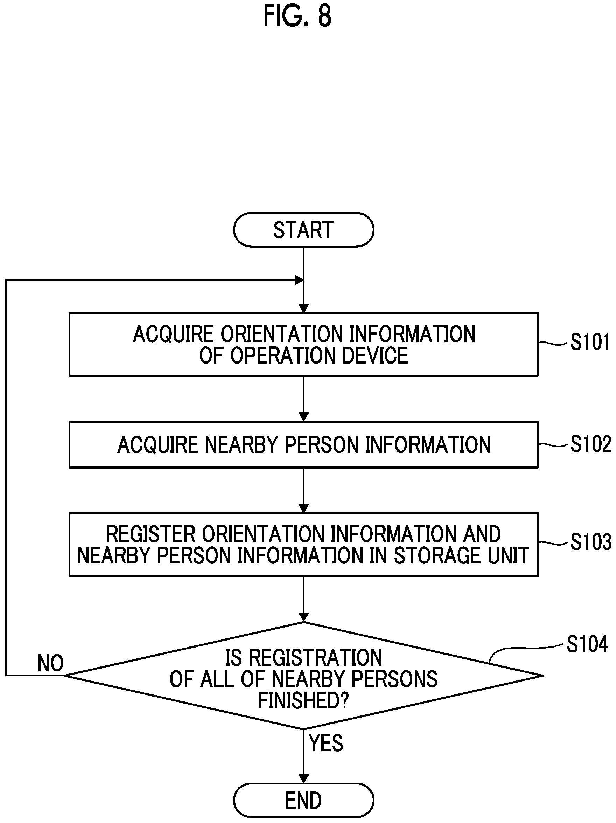

Fig. 8 is a flowchart showing a series of flows of the process shown in the parts (A) to (C) of Figs. 7.

In the present exemplary embodiment, first, the selector 43 directs the operation device 300 toward the nearby person 42. Next, the selector 43 performs a predetermined operation of selecting an input button or the like, with respect to the operation device 300.

Accordingly, the CPU 31a acquires information about the orientation of the operation device 300 that is in a state of being directed toward the nearby person 42 (step S101).

Next, the selector 43 inputs nearby person information. In response to this, the CPU 31a acquires the nearby person information (step S102).

Thereafter, the CPU 31a associates the acquired information about the orientation with the acquired nearby person information. Next, the CPU 31a registers, in the storage unit 312, the information about the orientation and the nearby person information associated with each other (step S103).

Thereafter, through the display unit 314, the CPU 31a inquires the selector 43 whether or not registration of all of the nearby persons 42 is finished.

In response to this, the selector 43 makes a response through the display unit 314. Although description is omitted above, the display unit 314 is composed of a touch panel.

Next, the CPU 31a determines whether or not the registration of all of the nearby persons 42 is finished based on the response from the selector 43 (step S104).

Then, in a case where the CPU 31a determines that the registration of all of the nearby persons 42 is finished, the process ends. On the other hand, in a case where the CPU 31a does not determine that the registration of all of the nearby persons 42 is finished, the CPU 31a performs a process in step S101 and subsequent steps again.

In a case where the process shown in the parts (A) to (C) of Fig. 7 and Fig. 8 is finished, the storage unit 312 enters a state as shown in Fig. 6. In the storage unit 312, the orientations of the operation device 300 and the nearby persons 42 are stored in a state where the orientations of the operation device 300 and the nearby persons 42 are respectively associated with each other.

Note that, regarding the information about the orientation registered in the storage unit 312, a value having a lower limit and an upper limit may be registered. For example, although information of 45° is registered in Fig. 6, a value of 44° to 46° may be registered instead of 45°, for example.

In a case of registering a value having a lower limit and an upper limit, the lower limit and the upper limit are obtained based on a value acquired in step S101 described above. Specifically, the lower limit is obtained by subtracting a predetermined value from the value acquired in step S101. In addition, the upper limit is obtained by adding a predetermined value to the value acquired in step S101.

Then, the obtained upper limit and lower limit are registered in the storage unit 312.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

### [Description about Database]

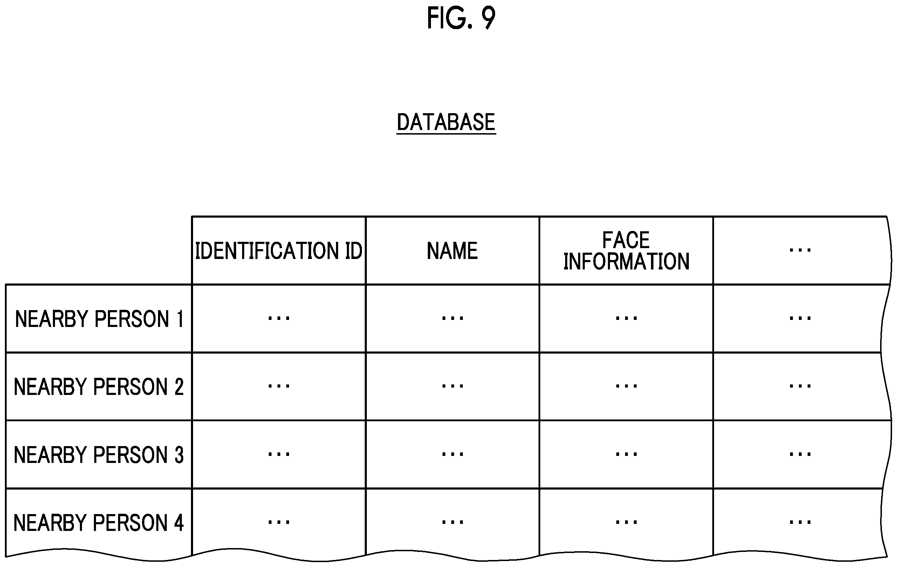

Fig. 9 is a diagram showing a database stored in the information storage unit 19 of the management server 100 shown in Fig. 3.

As shown in Fig. 9, in the database, information about the nearby person 42 is registered for each nearby person 42.

In the database, an identification ID, which is information used to identify each of the nearby persons 42, is registered for each nearby person 42. In addition, in the database, the name of the nearby person 42 is registered for each nearby person 42.

In addition, in the database, face information and the like of the nearby person 42 is registered for each nearby person 42.

In the present exemplary embodiment, the face of the nearby person 42 is imaged in advance. Then, the face information, which is information about the face of the nearby person 42, is registered in the database.

Examples of the face information include an image of the face of the nearby person 42. In addition, examples of the face information also include information about the feature amount of the face of the nearby person 42. The information about the feature amount is obtained by analyzing the image of the face of the nearby person 42.

### [Process Performed by Management Server]

A video acquired by the device 200 shown in Fig. 2 is transmitted to the management server 100 (refer to Fig. 1). Specifically, a video acquired by the device camera 214 (refer to Fig. 4) provided in the device 200 is transmitted to the management server 100.

In addition, voice information obtained by the microphone 600 shown in Fig. 2 is also transmitted to the management server 100.

Accordingly, the CPU 11a (refer to Fig. 3) of the management server 100 acquires the video or the voice information.

Furthermore, in the present exemplary embodiment, information acquired by the operation device 300 shown in Fig. 2 is also transmitted to the management server 100. In response to this, the CPU 11a of the management server 100 acquires the information acquired by the operation device 300.

Specifically, the CPU 11a acquires, from the operation device 300, information about the nearby person 42 specified by the operation device 300.

The operation device 300 outputs information about the nearby person 42 who is selected by the selector 43 operating the operation device 300.

This nearby person 42 is the nearby person 42 who has made an utterance. This nearby person 42 is the nearby person 42 specified as a person who has made an utterance by the selector 43.

Hereinafter, in the present specification, the nearby person 42 who makes an utterance may be referred to as an "uttering nearby person 42". In other words, the nearby person 42 selected by the selector 43 may be referred to as a "uttering nearby person 42".

The CPU 11a of the management server 100 acquires, from the operation device 300, information about the uttering nearby person 42.

In addition, the CPU 11a of the management server 100 specifies the nearby person 42 based on the video acquired by the device camera 214.

The CPU 11a specifies the nearby person 42 shown in the video based on the video acquired by the device camera 214. The CPU 11a specifies the nearby person 42 shown in the video based on the video transmitted from the device 200.

In a case where the nearby person 42 is to be specified, the CPU 11a acquires an image of the face of each nearby person 42 shown in the video. Then, the CPU 11a specifies the nearby person 42 based on the image of the face and the face information stored in the database. Specifically, here, the CPU 11a specifies the name of each nearby person 42.

In addition, the CPU 11a acquires the utterance content 48 of the nearby person 42 based on the voice information obtained by the microphone 600.

Furthermore, as described above, the CPU 11a acquires the information about the uttering nearby person 42 that is transmitted from the operation device 300.

The CPU 11a performs a process of associating the utterance content 48 with the uttering nearby person 42. The association between the utterance content 48 and the uttering nearby person 42 is performed based on time information, as will be described later.

In a case where the utterance content 48 is associated with the uttering nearby person 42, it is possible to specify which nearby person 42 is the utterer of the utterance content 48.

Then, the CPU 11a generates control information that causes the target person 41 to be notified of the utterance content 48. Accordingly, in the present exemplary embodiment, the utterance content 48 is displayed on the display unit 217 in a state of being associated with the uttering nearby person 42.

As described above, the CPU 11a of the management server 100 acquires the voice information acquired by the microphone 600.

The microphone 600 sequentially outputs the voice information acquired by the microphone 600. In this case, the microphone 600 also outputs time information output from a clock (not shown) provided in the microphone 600.

In the present exemplary embodiment, the voice information and the time information are output from the microphone 600 in a state of being associated with each other.

In addition, as described above, the CPU 11a of the management server 100 acquires the information about the uttering nearby person 42 from the operation device 300. The information about the uttering nearby person 42 is information about the nearby person 42 specified by the CPU 31a of the operation device 300.

The information about the uttering nearby person 42 is sequentially transmitted from the operation device 300. Furthermore, the operation device 300 sequentially outputs time information indicating a time when the transmission is performed.

The operation device 300 is provided with the clock (not shown). Time information output from the clock is also output from the operation device 300 to the management server 100.

The information about the uttering nearby person 42 and the time information are output from the operation device 300 in a state of being associated with each other.

As described above, the microphone 600 outputs the voice information and the time information in a state where the voice information and the time information are associated with each other.

In addition, the information about the uttering nearby person 42 and the time information are output from the operation device 300 in a state where the information about the uttering nearby person 42 and the time information are associated with each other.

In response to this, the management server 100 acquires the voice information and the time information. In addition, the management server 100 acquires the information about the uttering nearby person 42 and the time information.

In a case where the CPU 11a of the management server 100 acquires the voice information, the CPU 11a acquires the utterance content 48 based on the voice information. A known method may be used to acquire the utterance content 48 based on the voice information.

Each time the utterance content 48 is acquired, the CPU 11a associates the utterance content 48 with the time information. The CPU 11a associates the utterance content 48 with the time information that is transmitted from the microphone 600 together with the voice information.

The CPU 11a associates the utterance content 48 with the time information indicating a time when the voice information, which is the base of the utterance content 48, is obtained.

Then, the CPU 11a associates, based on the time information, the acquired information about the uttering nearby person 42 with the acquired utterance content 48.

Accordingly, the utterance content 48 and the uttering nearby person 42 who is the utterer of the utterance content 48 are associated with each other.

Next, the CPU 11a of the management server 100 generates control information that causes the utterance content 48 to be displayed on the display unit 217 (refer to Fig. 2) of the device 200.

The CPU 11a associates the utterance content 48 with the nearby person 42 displayed on the display unit 217. The CPU 11a associates the utterance content 48 with the uttering nearby person 42 who is one of the nearby persons 42 displayed on the display unit 217.

The CPU 11a generates control information that causes the utterance content 48 to be displayed in a state where the utterance content 48 is associated with the uttering nearby person 42.

In other words, the CPU 11a generates control information that causes the utterance content 48 to be associated with the nearby person 42 who has actually made an utterance.

In the case of generation of such control information, first, the CPU 11a specifies each nearby person 42. The CPU 11a specifies each nearby person 42 displayed on the display unit 217. The CPU 11a specifies each nearby person 42 based on a video acquired by the device camera 214 (refer to Fig. 4).

Specifically, the CPU 11a specifies each nearby person 42 based on a video and face information of the nearby person 42.

The CPU 11a specifies each nearby person 42 based on a video of the nearby person 42 in the video and the face information. The CPU 11a specifies each nearby person 42 based on the video of the nearby person 42 and the face information registered in the database.

Thereafter, the CPU 11a specifies the uttering nearby person 42 from among the specified nearby persons 42. The CPU 11a specifies, from among the specified nearby persons 42, the uttering nearby person 42 who has actually made an utterance.

Specifically, the CPU 11a specifies, from among the specified nearby persons 42, the nearby person 42 who coincides with the uttering nearby person 42. The CPU 11a specifies, from among the nearby persons 42, the nearby person 42 who coincides with the uttering nearby person 42 transmitted from the operation device 300.

More specifically, the CPU 11a specifies, based on a name transmitted from the operation device 300, the nearby person 42 who coincides with the uttering nearby person 42.

Next, the CPU 11a generates control information that causes the above-described utterance content 48 to be associated with the specified nearby person 42.

The CPU 11a generates the control information that causes the utterance content 48 to be displayed with the utterance content 48 being associated with the nearby person 42.

Accordingly, as shown in Fig. 2, the utterance content 48 is associated with the nearby person 42 who has made an utterance and is displayed on the display unit 217. In other words, the utterance content 48 is associated with the nearby person 42 toward which the operation device 300 is directed.

The CPU 11a specifies the utterance content 48 as described above. In addition, as described above, the CPU 11a specifies the uttering nearby person 42 based on information from the operation device 300.

Furthermore, the CPU 11a specifies each nearby person 42 displayed on the display unit 217 of the device 200.

Then, the CPU 11a associates, based on information about the uttering nearby person 42, the utterance content 48 with the uttering nearby person 42 displayed on the display unit 217. The CPU 11a associates, based on the name of the uttering nearby person 42, the utterance content 48 with the uttering nearby person 42 displayed on the display unit 217.

Next, the CPU 11a generates the above-described control information.

This control information is control information that causes the utterance content 48 to be displayed on the display unit 217 of the device 200. In addition, this control information is control information that causes the utterance content 48 to be associated with the uttering nearby person 42 displayed on the display unit 217.

The CPU 11a generates the control information that causes the utterance content 48 to be associated with the uttering nearby person 42.

As the control information, the CPU 11a generates control information that includes position information, which is information about a position at which the utterance content 48 is to be displayed.

The CPU 11a determines the position of the uttering nearby person 42 displayed on the display unit 217 as the position at which the utterance content 48 is to be displayed. The CPU 11a determines, as the position at which the utterance content 48 is to be displayed, a position near the head of the uttering nearby person 42.

Then, the CPU 11a generates the control information that includes the position information, which is information about the position at which the utterance content 48 is to be displayed. In addition, regarding the CPU 11a, the control information also includes the specified utterance content 48.

In addition, in the present exemplary embodiment, the control information including the position information and the utterance content 48 is transmitted from the management server 100 to the device 200.

Then, the CPU 21a (refer to Fig. 4) of the device 200 performs display control of the display unit 217 based on the control information. Accordingly, the utterance content 48 is displayed on the display unit 217 at a position specified by the position information.

Accordingly, for example, the display unit 217 of the device 200 displays content as shown in Fig. 2. In a case where the content is displayed, the utterance content 48 is displayed in a state where the utterance content 48 is associated with the uttering nearby person 42.

In the present exemplary embodiment, as described above, the utterance content 48 of the uttering nearby person 42 is displayed on the display unit 217 of the device 200. In the present exemplary embodiment, in a case where the nearby person 42 makes an utterance, the utterance content 48 of the nearby person 42 is displayed on the display unit 217.

Furthermore, in the present exemplary embodiment, the utterance content 48 is displayed in a state where the utterance content 48 is associated with the nearby person 42 who has actually made an utterance. The utterance content 48 is displayed in a state where the utterance content 48 is associated with the nearby person 42 toward which the operation device 300 is directed.

Note that in the present exemplary embodiment, as shown in Fig. 2, a displayed image 45, which is an image representing a speech balloon, is displayed. In a case where the utterance content 48 is to be displayed, the displayed image 45 is displayed. The utterance content 48 is displayed inside the displayed image 45.

### [Description about Operation Device]

The operation device 300 is configured such that each of a plurality of candidates who possibly make an utterance is selectable. In the present exemplary embodiment, the plurality of nearby persons 42 correspond to the plurality of candidates.

The operation device 300 is configured such that each of the nearby persons 42 is selectable. The selector 43 operates the operation device 300 to select an utterer from among the plurality of nearby persons 42.

In a case where the operation device 300 is operated, the CPU 31a (refer to Fig. 5) of the operation device 300 acquires operation information of the operation device 300. The CPU 31a acquires the operation information, which is information about an operation performed on the operation device 300 by the selector 43.

The CPU 31a specifies an utterer based on the operation information. In other words, the CPU 31a specifies the uttering nearby person 42 based on the operation information.

The CPU 31a specifies, from among the plurality of nearby persons 42 registered in the storage unit 312 in advance, some nearby persons 42 who have made an utterance.

The CPU 31a acquires, as the operation information, orientation information which is information indicating the orientation of the operation device 300. The CPU 31a acquires, as the operation information, operation information about an operation of changing the orientation of the operation device 300.

Then, the CPU 31a specifies an utterer based on the operation information. In other words, the CPU 31a specifies the uttering nearby person 42 based on the operation information.

The storage unit 312 of the operation device 300 stores the orientations of the operation device 300 and the nearby persons 42. In the storage unit 312, the orientations of the operation device 300 and the nearby persons 42 are stored in a state where the orientations of the operation device 300 and the nearby persons 42 are respectively associated with each other.

The CPU 31a specifies the uttering nearby person 42 based on an orientation specified by the acquired operation information and information stored in the storage unit 312.

The CPU 31a specifies, from among the orientations stored in the storage unit 312, an orientation that coincides with the orientation specified by the acquired operation information.

The CPU 31a specifies, as the uttering nearby person 42, the nearby person 42 stored in the storage unit 312 in a state of being associated with the orientation coinciding with the orientation specified by the acquired orientation information.

In this manner, the CPU 31a of the operation device 300 specifies the uttering nearby person 42 who is the utterer. Note that the uttering nearby person 42 may also be specified by the CPU 1 1a of the management server 100.

In a case where the CPU 11a of the management server 100 specifies the uttering nearby person 42, the operation information is transmitted from the operation device 300 to the management server 100.

Then, the CPU 11a of the management server 100 specifies the uttering nearby person 42 based on the operation information transmitted thereto.

In a case where the CPU 11a of the management server 100 specifies the uttering nearby person 42, information used for the specification is stored in the information storage unit 19 (refer to Fig. 3).

Specifically, information that is stored in the storage unit 312 of the operation device 300 and that is shown in Fig. 6 is stored in the information storage unit 19 of the management server 100.

The CPU 11a specifies the uttering nearby person 42 based on the operation information transmitted from the operation device 300 and the information stored in the information storage unit 19.

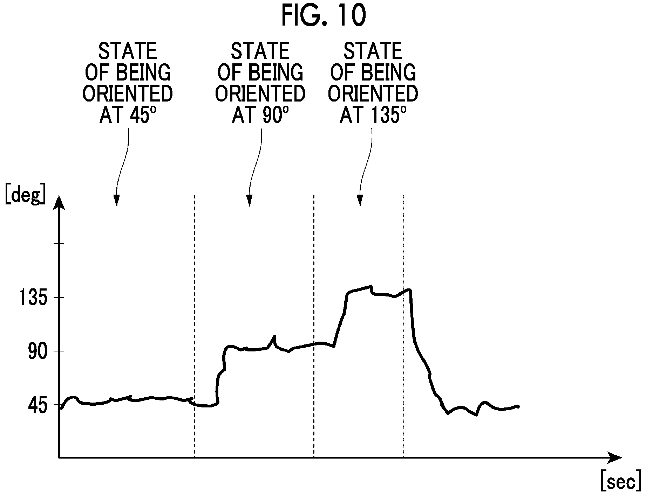

Fig. 10 is a diagram showing information about the orientation acquired by the CPU 31a of the operation device 300.

As described above, the CPU 31a acquires orientation information which is information indicating the orientation of the operation device 300.

In an example shown in Fig. 10, the CPU 31a acquires orientation information corresponding to 45° and orientation information corresponding to 90°. Furthermore, the CPU 31a acquires orientation information corresponding to 135°.

In this example, as an operation performed on the operation device 300, an operation of changing the state of the operation device 300 from a state where the operation device 300 faces a direction of 45° to a state where the operation device 300 faces a direction of 90° is performed. In addition, in this example, as an operation performed on the operation device 300, an operation of changing the state of the operation device 300 from the state where the operation device 300 faces the direction of 90° to a state where the operation device 300 faces a direction of 135° is performed.

In a case where these operations are performed, the CPU 31a acquires the orientation information corresponding to 45°. In addition, the CPU 31a acquires the orientation information corresponding to 90°. In addition, the CPU 31a acquires the orientation information corresponding to 135°.

Then, the CPU 31a specifies the uttering nearby person 42 based on the acquired orientation information.

The CPU 31a specifies the uttering nearby person 42 based on operation information, which is information about an operation performed on the operation device 300 by the selector 43. The "operation performed on the operation device 300" herein is an operation of changing the orientation of the operation device 300.

In the case of specification of the uttering nearby person 42, the CPU 31a of the operation device 300 specifies the uttering nearby person 42 from among a plurality of candidates stored in advance.

The CPU 31a specifies the uttering nearby person 42 based on an orientation specified by the acquired operation information and information stored in the storage unit 312.

Thereafter, the CPU 31a transmits information about the specified uttering nearby person 42 to the management server 100. Note that, at this time, time information is also transmitted to the management server 100 as described above.

Note that the CPU 31a may acquire, as the orientation information, information about the orientation of the operation device 300 in a specific state. Examples of the "specific state" include a state where the movement speed of the operation device 300 is lower than a predetermined movement speed.

In this case, the CPU 31a acquires information about the orientation of the operation device 300 that is in a state where the movement speed is lower than the predetermined movement speed.

In this case, information about the orientation of the operation device 300 that is in a state where the movement speed is higher than the predetermined movement speed is not acquired as the orientation information.

In addition, examples of the state where "the movement speed is lower than the predetermined movement speed" includes a state where the movement speed of the operation device 300 is zero.

Here, a case where a first nearby person 421 makes an utterance first in an example shown in Fig. 2 will be assumed. In this case, the operation device 300 is directed toward the first nearby person 421.

A case where a third nearby person 423 makes an utterance thereafter will be assumed. In this case, the operation device 300 facing the first nearby person 421 is directed toward the third nearby person 423.

At this time, the operation device 300 temporarily faces a second nearby person 422. In this case, the second nearby person 422 may be specified as a person who has made an utterance although the second nearby person 422 has not made an utterance. That is, the utterer may be erroneously specified.

On the other hand, in the present exemplary embodiment, information about the orientation of the operation device 300 that is in a state where the movement speed thereof is high is not acquired as orientation information. In this case, the above-described erroneous specification is less likely to occur.

In a case where the operation device 300 facing the first nearby person 421 is directed toward the third nearby person 423, the movement speed of the operation device 300 is made high. The movement speed of the operation device 300 is high in a case where the operation device 300 faces the second nearby person 422.

In this case, the orientation information of the operation device 300 facing the second nearby person 422 is not used to specify the uttering nearby person 42. In this case, the second nearby person 422 is not erroneously specified as the uttering nearby person 42.

The CPU 11a of the management server 100 associates the uttering nearby person 42 with an utterance that is made in a case where the operation device 300 is operated. The CPU 11a associates the utterance with the uttering nearby person 42 specified by the operation device 300.

The CPU 11a associates the uttering nearby person 42 with an utterance made with the operation device 300 facing a direction specified by the orientation information.

As described above, the CPU 11a associates the uttering nearby person 42 with the utterance based on time information from the microphone 600 and time information from the operation device 300.

The CPU 11a associates, based on the two pieces of time information, the utterance content 48 with the uttering nearby person 42 who is the utterer of the utterance content 48.

Note that the utterance content 48 and the uttering nearby person 42 may not be associated with each other based on time information.

Information about the uttering nearby person 42 that is generated sequentially may be associated with the utterance content 48 generated sequentially.

In this case, the CPU 11a of the management server 100 sequentially generates the utterance content 48 based on voice information transmitted from the microphone 600.

Then, the CPU 11a associates information about the uttering nearby person 42 with the sequentially generated utterance content 48. The CPU 11a associates the utterance content 48 with the information about the uttering nearby person 42 that is sequentially transmitted from the operation device 300.

After the information about the uttering nearby person 42 is associated with the utterance content 48, the CPU 11a generates control information as described above.

The CPU 11a generates control information used to control the display unit 217 of the device 200.

The CPU 11a generates control information that causes the utterance content 48 to be displayed in a state where the utterance content 48 is associated with the uttering nearby person 42.

Accordingly, the utterance content 48 is associated with the uttering nearby person 42 displayed on the display unit 217.

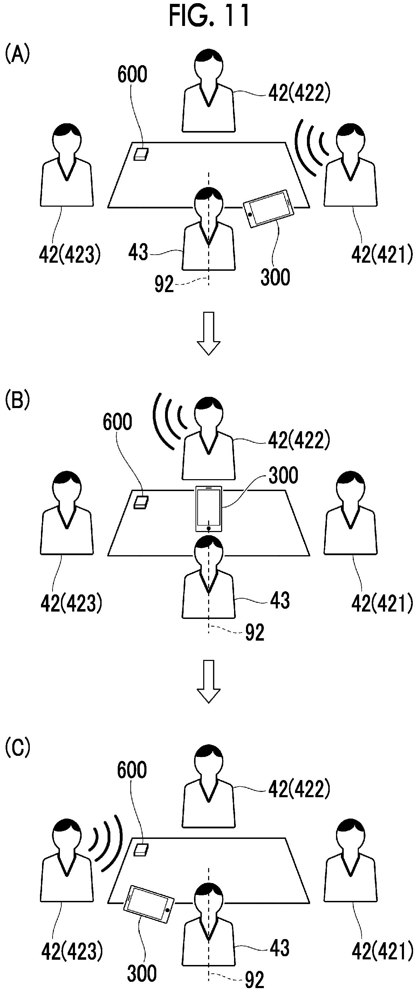

Parts (A) to (C) of Fig. 11 are diagrams showing an example of an operation performed on the operation device 300.

In the parts (A) to (C) of Fig. 11, the target person 41 is not shown.

In the part (A) of Fig. 11, the first nearby person 421 is making an utterance. In addition, in the part (A) of Fig. 11, the operation device 300 is facing the first nearby person 421. In this case, the CPU 31a of the operation device 300 specifies the first nearby person 421 as the uttering nearby person 42.

Thereafter, in this example, as shown in the part (B) of Fig. 11, the second nearby person 422 starts to make an utterance. Accordingly, the selector 43 changes the orientation of the operation device 300.

In this case, the operation device 300 rotates around a vertical axis 92 extending through the selector 43, and the orientation of the operation device 300 is changed. Accordingly, the operation device 300 enters a state as shown in the part (B) of Fig. 11. In the state as shown in the part (B) of Fig. 11, the operation device 300 faces the second nearby person 422.

In the state as shown in the part (B) of Fig. 11, the CPU 31a of the operation device 300 specifies the second nearby person 422 who is another utterer.

The second nearby person 422 is the other utterer whose position in a direction around the vertical axis 92 is different from the position of the first nearby person 421. In the direction around the vertical axis 92, the position of the second nearby person 422 is different from the position of the first nearby person 421.

The CPU 31a specifies the second nearby person 422 after specifying the first nearby person 421. In a case where the orientation of the operation device 300 is changed and the operation device 300 faces the second nearby person 422, the CPU 31a specifies the second nearby person 422.

In this example, the operation device 300 rotates around the vertical axis 92. Accordingly, the orientation of the operation device 300 is changed.

In the state as shown in the part (B) of Fig. 11, the CPU 31a specifies the second nearby person 422.

The CPU 31a specifies the second nearby person 422 whose position in the direction around the vertical axis 92 is different from the position of the first nearby person 421.

Thereafter, in this processing example, as shown in the part (C) of Fig. 11, the third nearby person 423 starts to make an utterance.

Accordingly, the selector 43 changes the orientation of the operation device 300. Accordingly, the operation device 300 further rotates around the vertical axis 92, and the orientation of the operation device 300 is changed.

Accordingly, the operation device 300 enters a state as shown in the part (C) of Fig. 11. In the state as shown in the part (C) of Fig. 11, the operation device 300 faces the third nearby person 423.

In the state shown in the part (C) of Fig. 11, the CPU 31a specifies the third nearby person 423 who is another nearby person 42 different from the second nearby person 422.

The third nearby person 423 is another utterer whose position in the direction around the vertical axis 92 is different from the position of the second nearby person 422. In the direction around the vertical axis 92, the position of the third nearby person 423 is different from the position of the second nearby person 422.

The CPU 31a specifies the third nearby person 423.

In a case where the orientation of the operation device 300 is changed and the operation device 300 faces the third nearby person 423, the CPU 31a specifies the third nearby person 423.

In a case where the operation device 300 enters the state as shown in the part (C) of Fig. 11 also, the operation device 300 rotates around the vertical axis 92 and the orientation of the operation device 300 is changed.

In the state as shown in the part (C) of Fig. 11, the CPU 31a specifies the third nearby person 423.

The CPU 31a specifies the third nearby person 423 whose position in the direction around the vertical axis 92 is different from the position of the second nearby person 422.

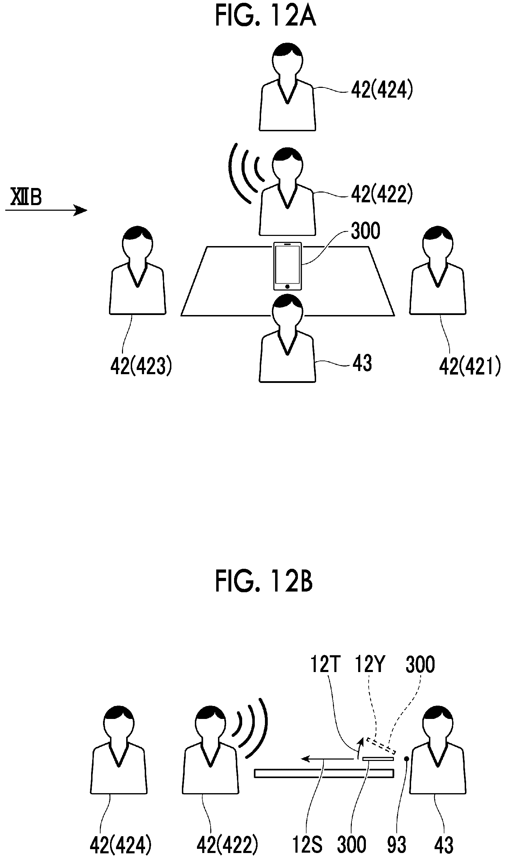

Figs. 12A and 12B are diagrams showing another processing example. Fig. 12B is a diagram showing a case where the operation device 300 or the like is seen in a direction indicated by an arrow XIIB in Fig. 12A. In Fig. 12B, the first nearby person 421 and the third nearby person 423 are not shown.

In this processing example, as shown in Fig. 12B, a fourth nearby person 424 is positioned behind the second nearby person 422.

In this processing example, first, the second nearby person 422 makes an utterance.

In this case, the operation device 300 faces a direction indicated by an arrow 12S in Fig. 12B. In this case, the CPU 31a of the operation device 300 specifies the second nearby person 422 as the uttering nearby person 42.

Thereafter, in this example, the fourth nearby person 424 starts to make an utterance. Accordingly, the selector 43 changes the orientation of the operation device 300. As represented by an arrow 12T in Fig. 12B, the selector 43 performs an operation of directing the operation device 300 toward an upper side.

In this case, the operation device 300 rotates around a horizontal axis 93 which is an axis along a horizontal direction. Accordingly, the orientation of the operation device 300 is changed. Accordingly, the operation device 300 enters a state denoted by a reference numeral "12Y".

In a case where the operation device 300 enters the state denoted by the reference numeral "12Y", the CPU 31a specifies the fourth nearby person 424 who is another utterer.

In a case where the orientation of the operation device 300 is changed as shown in Fig. 12B, the fourth nearby person 424 is specified.

In this example, the operation device 300 rotates around the horizontal axis 93. The operation device 300 is rotated to face a diagonally upward direction. The horizontal axis 93 extends in a direction orthogonal to the paper surface of Fig. 12B.

Also in this example shown in Figs. 12A and 12B, the operation device 300 rotates and the operation device 300 faces a direction different from a direction that the operation device 300 faces before the rotation. In this case, the CPU 31a specifies the fourth nearby person 424 different from the second nearby person 422.

As shown in Fig. 12B, the fourth nearby person 424 is positioned to be farther from the operation device 300 than the second nearby person 422 is.

The CPU 31a specifies the fourth nearby person 424 in a case where the operation device 300 enters a state of facing a diagonally upward direction.

In this example, the orientation information of the operation device 300 facing the diagonally upward direction is associated with the fourth nearby person 424. The orientation information and the fourth nearby person 424 are stored in the storage unit 312 (refer to Fig. 5) in a state of being associated with each other.

In this case, the CPU 31a specifies the fourth nearby person 424 in a case where the operation device 300 enters a state of facing a diagonally upward direction.

In this example, the CPU 31a specifies the fourth nearby person 424 positioned to be farther from the operation device 300 than the second nearby person 422 is.

In a case where the operation device 300 enters a state of facing a diagonally upward direction, the CPU 31a specifies the fourth nearby person 424 who is an example of another utterer.

As described above, the fourth nearby person 424 is the nearby person 42 positioned to be farther from the operation device 300 than the second nearby person 422 is. Here, the CPU 31a specifies the fourth nearby person 424 positioned to be farther from the operation device 300 than the second nearby person 422 is.

Note that, there may also be a case where the fourth nearby person 424 is positioned to be closer to the operation device 300 than the second nearby person 422 is. In other words, there may also be a case where the fourth nearby person 424 is positioned to be closer to the selector 43 than the second nearby person 422 is.

In this case, the selector 43 performs, with respect to the operation device 300, an operation of directing the operation device 300 downward, for example. In this case as well, the selector 43 performs, with respect to the operation device 300, an operation of causing the operation device 300 to rotate around the horizontal axis 93.

In this case, the CPU 31a specifies the fourth nearby person 424 positioned to be closer to the operation device 300 than the second nearby person 422 is.

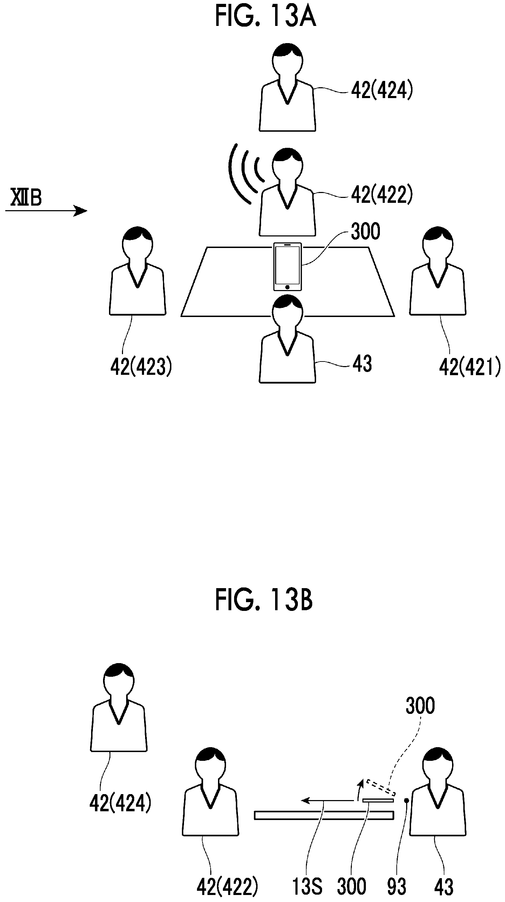

Figs. 13A and 13B are diagrams showing another processing example.

Fig. 13B is a diagram showing a case where the operation device 300 or the like is seen in a direction indicated by an arrow XIIIB in Fig. 13A. In Fig. 13B, the first nearby person 421 and the third nearby person 423 are not shown.

In this processing example, as shown in Fig. 13B, a fourth nearby person 424 is positioned above the second nearby person 422.

In this processing example, first, the operation device 300 faces a direction indicated by an arrow 13S in Fig. 13B. Accordingly, the CPU 31a of the operation device 300 specifies the second nearby person 422.

Thereafter, in this processing example, the operation device 300 rotates around the horizontal axis 93 and the orientation of the operation device 300 is changed. Accordingly, as shown in Fig. 13B, the operation device 300 faces the fourth nearby person 424. In this example as well, the selector 43 performs an operation of directing the operation device 300 upward.

In this case, the CPU 31a specifies the fourth nearby person 424 who is another utterer. As described above, the fourth nearby person 424 is an utterer positioned above the second nearby person 422.

After the second nearby person 422 is specified, the CPU 31a specifies the fourth nearby person 424 in a case where the orientation of the operation device 300 is changed.

In a case where the orientation of the operation device 300 is changed such that the operation device 300 faces an upper side, the CPU 31a specifies the fourth nearby person 424.

Note that although not shown, there may be a case where the fourth nearby person 424 is positioned below the second nearby person 422.

In this case, the selector 43 performs an operation of directing the operation device 300 downward.

In this case as well, the selector 43 operates the operation device 300 such that the operation device 300 rotates around the horizontal axis 93. In this case, the CPU 31a specifies the fourth nearby person 424 positioned below the second nearby person 422.

In the processing examples shown in Figs. 12A to 13B, the operation device 300 rotates around the horizontal axis 93. Accordingly, the orientation of the operation device 300 is changed.

In this case, as described above, another utterer, who is closer to or farther from the operation device 300 than the first utterer is, is specified.

Alternatively, in this case, as described above, another utterer, who is positioned above or below the first utterer, is specified.

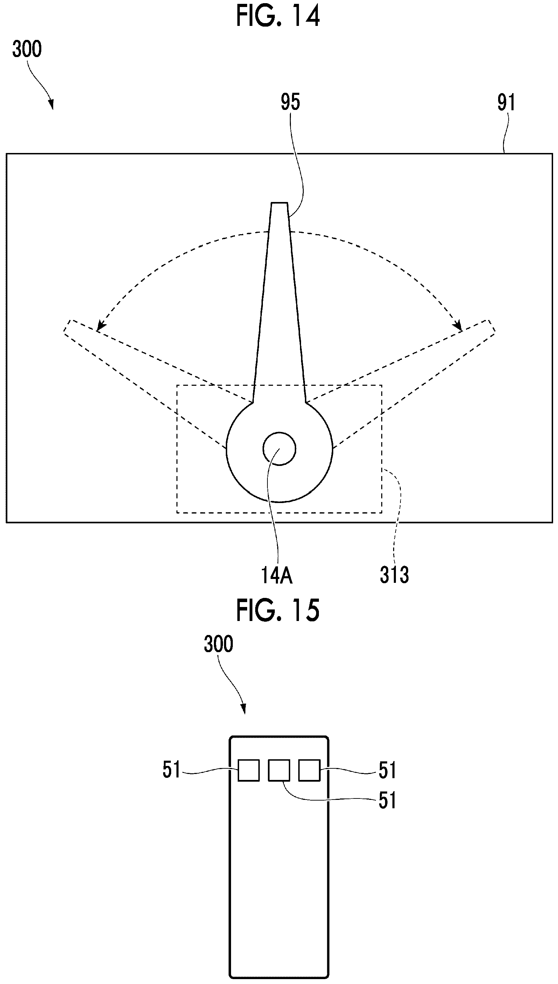

Fig. 14 is a diagram showing another configuration example of the operation device 300.

In this configuration example shown in Fig. 14, a movable portion 95 that is movable with respect to a device body 91 is provided separately from the device body 91. The movable portion 95 is rotatable around a position represented by a reference numeral "14A".

In the above description, information about the orientation of the entire operation device 300 is acquired as the orientation information of the operation device 300. However, in the case of the operation device 300 shown in Fig. 14, information about the orientation of the movable portion 95 is acquired as the orientation information of the operation device 300.

In a case where the operation device 300 shown in Fig. 14 is used, the selector 43 operates the movable portion 95. The selector 43 operates the movable portion 95 to direct the movable portion 95 having a rod-like shape toward each nearby person 42.

In this configuration example, the CPU 31a of the operation device 300 acquires information indicating the orientation of the movable portion 95 as the orientation information.

The operation device 300 shown in Fig. 14 is provided with the sensor 313 that detects the angle of rotation of the movable portion 95. The CPU 31a acquires the orientation information based on output from the sensor 313.

Processing after the acquisition of the orientation information is the same as the processing described above. A description about the processing after the acquisition of the orientation information will be omitted.

Fig. 15 is a diagram showing another configuration example of the operation device 300.

In this configuration example, the operation device 300 is provided with a plurality of buttons 51. The plurality of buttons 51 are provided to correspond to a plurality of candidates, respectively. In other words, the plurality of buttons 51 are provided to correspond to the nearby persons 42, respectively.

In the case of the operation device 300 as well, the CPU 31a of the operation device 300 acquires operation information, which is information about an operation performed by the selector 43.

The CPU 31a acquires, as the operation information, information about the button 51 selected by the selector 43. The CPU 31a specifies the utterer based on this information.

The operation device 300 shown in Fig. 15 is also provided with the storage unit 312 (refer to Fig. 5). In the storage unit 312, the buttons 51 and the nearby persons 42 are registered in a state of being associated with each other.

The CPU 31a specifies, based on the selected button 51 and the information stored in the storage unit 312, the nearby person 42 who has made an utterance. That is, the CPU 31a specifies the uttering nearby person 42.

The processing after the specification of the uttering nearby person 42 is the same as the above.

In a case where the uttering nearby person 42 is specified, the uttering nearby person 42 is associated with the utterance content 48 in the management server 100. Thereafter, control information that causes associating the utterance content 48 with the uttering nearby person 42 displayed on the display unit 217 (refer to Fig. 2) is generated.

Note that the uttering nearby person 42 may be specified by the management server 100 even in a case where the operation devices 300 shown in Figs. 14 and 15 are used. The uttering nearby person 42 may be specified by the management server 100 instead of the operation device 300.

The operation device 300 shown in each of Figs. 2, 14, and 15 may be the dedicated device 200. The operation device 300 may be the dedicated device 200 for specification of the uttering nearby person 42.

In addition, the operation device 300 may be realized by an information processing apparatus such as a smartphone or a tablet terminal.

A gyro sensor, an acceleration sensor, a direction sensor, and the like are provided in an information processing apparatus such as a smartphone or a tablet terminal. The orientation of an information processing apparatus can also be specified by the information processing apparatus.

Note that in a case where the operation device 300 shown in Fig. 14 is realized by an information processing apparatus, an image corresponding to the movable portion 95 is displayed. The image corresponding to the movable portion 95 is displayed on a display unit provided in the information processing apparatus. In addition, in this case, the display unit is composed of a touch panel.

In this case, the selector 43 performs an operation on the movable portion 95 displayed on the display unit to change the orientation of the movable portion 95.

In addition, in this case, the operation device 300 specifies, based on the orientation of the movable portion 95, the nearby person 42 who has made an utterance.

Next, a case where the operation device 300 shown in Fig. 15 is realized by an information processing apparatus will be described.

In this case, images corresponding to the buttons 51 are displayed on the display unit. In addition, in this case, the display unit is composed of a touch panel.

In this case, the selector 43 selects the button 51 to specify the uttering nearby person 42. The selector 43 selects the button 51 from among the plurality of buttons 51 displayed on the display unit to specify the uttering nearby person 42.

In addition, in this case, the CPU 31a of the operation device 300 specifies the uttering nearby person 42 based on the selected button 51.

In addition, the operation device 300 may also be realized by a microphone into which a sensor is incorporated. The operation device 300 may be realized by a microphone into which a gyro sensor, an acceleration sensor, a direction sensor, or the like is incorporated.

In this case, the selector 43 directs the microphone toward the nearby person 42 who has made an utterance.

In addition, the operation device 300 may also be realized by the above-described device 200 (refer to Fig. 2) that is to be mounted on the target person 41.

The device 200 may be mounted on the selector 43 and the operation device 300 operated by the selector 43 may be realized by the device 200. The operation device 300 may be realized by the device 200 that is to be mounted on the selector 43.

The device 200 is also provided with the sensor 213 (refer to Fig. 4) such as a gyro sensor, an acceleration sensor, or a direction sensor. The above-described orientation information can be acquired even in a case where the device 200 is used.

In a case where the device 200 is used, the selector 43 with the device 200 mounted thereon faces a direction toward the nearby person 42 who has made an utterance. Accordingly, the uttering nearby person 42 is specified.

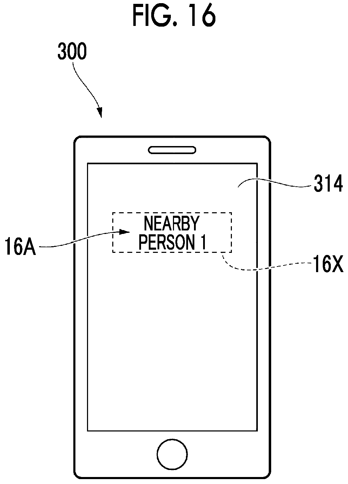

Fig. 16 is a diagram showing a modification example of the operation device 300. Fig. 16 shows the modification example of the operation device 300 shown in Fig. 2.

In this configuration example shown in Fig. 16, candidate information is displayed on the display unit 314 of the operation device 300.

In the present exemplary embodiment, as described above, the orientations of the operation device 300 and candidates who possibly make an utterance are respectively associated with each other. In other words, operations performed on the operation device 300 by the selector 43 and the nearby persons 42 are respectively associated with each other.

In this processing example, the CPU 31a of the operation device 300 acquires candidate information that is information about a candidate. The CPU 31a acquires candidate information that is information about a candidate associated with an operation performed by the selector 43.

The CPU 31a of the operation device 300 acquires, from the storage unit 312, the candidate information associated with the operation performed by the selector 43.

In addition, the CPU 31a generates control information that causes the selector 43 to be notified of the candidate information via the operation device 300.

Accordingly, in this example, a screen as shown in Fig. 16 is displayed on the display unit 314. As represented by a reference numeral "16A", information about the nearby person 42 corresponding to a direction that the operation device 300 faces is displayed on the screen.

In other words, candidate information associated with the direction that the operation device 300 faces is displayed on the screen.

In this case, the selector 43 can check which nearby person 42 has been specified by the operation device 300. Accordingly, the selector 43 can check whether the operation device 300 has been actually directed toward the nearby person 42 toward which the selector 43 wants to direct the operation device 300.

Furthermore, in this configuration example, the CPU 31a further generates control information that causes a display on a non-display portion to be changed.

The non-display portion refers to a portion other than a display portion of the display unit 314 on which the candidate information is displayed.

In the present exemplary embodiment, the inside of a rectangle denoted by a reference numeral "16X" is the display portion. In addition, the outside of the rectangle denoted by the reference numeral "16X" is the non-display portion.

The CPU 31a generates the control information each time the candidate information that the selector 43 is notified of via the display unit 314 is made different. The CPU 31a generates the control information each time the candidate information displayed on the display unit 314 is made different.

The control information is, as described above, the control information that causes a display on the non-display portion to be changed.

Specifically, the CPU 31a generates, as the control information, control information that causes the background color of the non-display portion to be changed.

In this case, the background color of the non-display portion is changed each time the nearby person 42 positioned on a side that the operation device 300 faces is made different. In other words, the color of the non-display portion is changed.

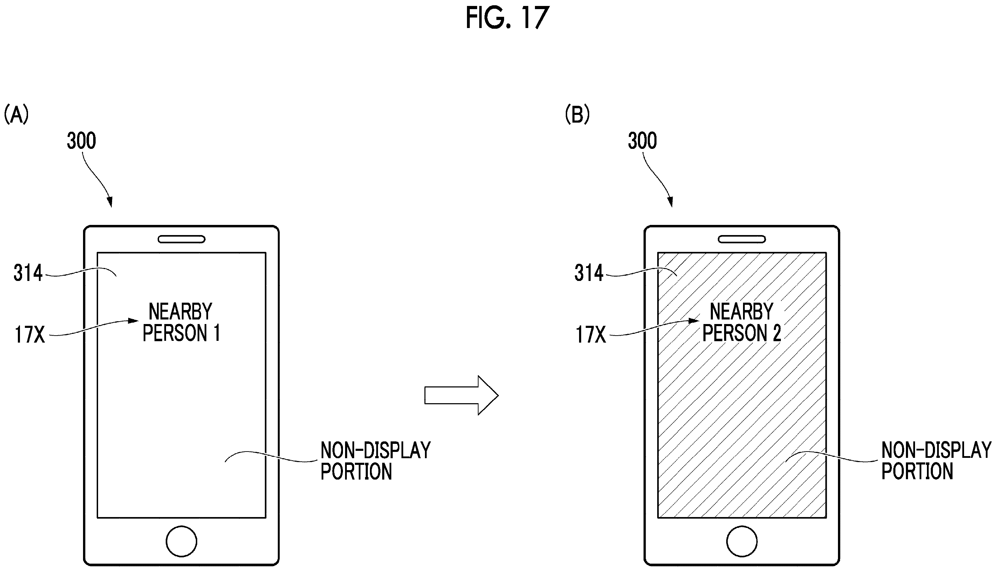

Parts (A) and (B) of Fig. 17 are diagrams showing the way in which the non-display portion is changed.

In part (A) of Fig. 17, "nearby person 1" which is information indicating the first nearby person 42 is displayed on the display unit 314 of the operation device 300 as candidate information.

In part (B) of Fig. 17, "nearby person 2" which is information indicating the second nearby person 42 is displayed on the display unit 314 of the operation device 300 as candidate information.

In the present exemplary embodiment, in a case where a side that the operation device 300 faces is changed, a display is changed as shown in the parts (A) and (B) of Fig. 17. Specifically, as represented by a reference numeral "17X", a display regarding information about the nearby person 42 is changed.

Furthermore, in the present exemplary embodiment, in a case where information about the nearby person 42 that is displayed is made different, the color of the non-display portion is changed.

In a case where the color of the non-display portion is changed, the selector 43 can more intuitively check an operation performed by the selector 43. The selector 43 can more intuitively check whether the operation device 300 has been actually directed toward the nearby person 42 toward which the selector 43 wants to direct the operation device 300.

Note that such display processing of the display unit 314 may also be performed in the operation device 300 shown in Fig. 14. In addition, such display processing of the display unit 314 may also be performed in the operation device 300 shown in Fig. 15.

### [Way in Which Notification about Utterance Content Is Made]

In the above description, processing of associating the utterance content 48 with the uttering nearby person 42 displayed on the display unit 217 of the device 200 has been described. In this case, the target person 41 is notified of both the utterer and the utterance content 48 of the utterer.

The way in which the target person 41 is notified is not limited thereto. In other words, the way in which content is displayed on the display unit 217 of the device 200 is not limited thereto.

It is not necessary that a video acquired by the device camera 214 is displayed on the display unit 217. Notification with respect to the target person 41 may be performed by means of text information only.

For example, the utterance content 48 and text information for specification of the uttering nearby person 42 may be displayed in a state of being associated with each other. Specifically, the content of an utterance and text information indicating the name of the uttering nearby person 42 may be displayed in a state of being associated with each other.

In addition, the color or the font of a text representing the content of an utterance may be different for each utterer.

In addition, the way in which the displayed image 45 shown in Fig. 2 is displayed may be different for each utterer.

Specifically, at least one of the shape, the line type, the line thickness, or the line color of the displayed image 45 may be different for each utterer.

In addition, although the operation device 300 acquires information about the orientation of the operation device 300 in the above description, the information about the orientation of the operation device 300 may be acquired by another method.

For example, the information about the orientation of the operation device 300 may be acquired based on a video in which the operation device 300 is shown.

In this case, for example, an entire-area camera is installed. The entire-area camera is a camera that images the nearby persons 42, the target person 41, the selector 43, and the operation device 300.

In this case, a video obtained by the entire-area camera is analyzed to specify a direction that the operation device 300 included in the video faces.

In addition, for example, the emission destination of light emitted from a light source provided in the operation device 300 may also be specified. Then, a direction that the operation device 300 faces may be specified based on the specified emission destination.

In this case, the operation device 300 is provided with a light source such as a laser pointer. In this case, the selector 43 operates the operation device 300 such that the nearby person 42 is irradiated with light from the light source.

Furthermore, in this case, a video obtained by the entire-area camera is analyzed to specify the emission destination of the light. Then, a direction that the operation device 300 faces is specified based on the emission destination.

In addition, in the above description, a case where the operation device 300 performs a part of processing executed in the information processing system 1 of the present exemplary embodiment and the management server 100 performs the other part of the processing has been described.

In the above description, the operation device 300 specifies the uttering nearby person 42 based on operation information. In addition, the management server 100 associates the uttering nearby person 42 with the utterance content 48.

However, the present invention is not limited thereto and the above-described processing executed in the information processing system 1 may be performed centering on the management server 100. In this case, the management server 100 specifies the uttering nearby person 42 based on operation information. Then, the management server 100 associates the uttering nearby person 42 with the utterance content 48.

The processing in the present exemplary embodiment may be realized by one apparatus such as one management server 100, or may be realized by a plurality of devices.

The information processing system 1 may be composed of a single apparatus or may be composed of a plurality of apparatuses.

### (Supplementary Note)

(((1))) An information processing system comprising:
   a processor configured to:
   acquire operation information of an operation device that is configured such that each of a plurality of candidates who possibly make an utterance is selectable and that is operated by a selector in a case where the selector selects an utterer from among the plurality of candidates;
   specify the utterer from among the plurality of candidates based on the acquired operation information; and
   associate the specified utterer with an utterance that is made in a case where the operation device is operated by the selector.
(((2))) The information processing system according to (((1))), wherein the processor is configured to:
   acquire, as the operation information, orientation information which is information indicating an orientation of the operation device operated by the selector or an orientation of a movable portion provided at the operation device;
   specify the utterer based on the orientation information; and
   associate the specified utterer with an utterance that is made in a case where the operation device or the movable portion faces a direction specified by the orientation information used for the specification of the utterer.
(((3))) The information processing system according to (((2))), further comprising:
   a storage unit that stores orientations of the operation device or orientations of the movable portion in a state where the orientations are respectively associated with the candidates,
   wherein the processor is configured to:
      specify the utterer based on the orientation specified by the acquired orientation information and information stored in the storage unit.
(((4))) The information processing system according to (((2))) or (((3))),
   wherein the processor is configured to:
   acquire, as the orientation information, information about the orientation of the operation device or the orientation of the movable portion in a case where a movement speed of the operation device or the movable portion is lower than a predetermined movement speed.
(((5))) The information processing system according to any one of (((2))) to (((4))),
   wherein the processor is configured to:
   specify another utterer whose position in a direction around a vertical axis is different from a position of the utterer, in a case where the operation device or the movable portion is rotated around the vertical axis and the orientation of the operation device or the movable portion is changed after the utterer is specified.
(((6))) The information processing system according to any one of (((2))) to (((5))),
   wherein the processor is configured to:
   specify another utterer who is positioned closer to the operation device or the movable portion than the utterer is or another utterer who is positioned farther from the operation device or the movable portion than the utterer is, in a case where the operation device or the movable portion is rotated around a horizontal axis and the orientation of the operation device or the movable portion is changed after the utterer is specified.
(((7))) The information processing system according to any one of (((2))) to (((5))),
   wherein the processor is configured to:
   specify another utterer who is positioned above or below the utterer, in a case where the operation device or the movable portion is rotated around a horizontal axis and the orientation of the operation device or the movable portion is changed after the utterer is specified.
(((8))) The information processing system according to (((1))),
   wherein the processor is configured to:
   acquire, as the operation information, information about an operation of making a selection from buttons that respectively correspond to the plurality of candidates and that are provided at the operation device;
   specify the utterer based on a selected button which is a button selected from among a plurality of buttons by the selector; and
   associate the specified utterer with an utterance that is made in a case where the selected button is selected by the selector.
(((9))) The information processing system according to any one of (((1))) to (((8))),
   wherein operations that are performed on the operation device by the selector and the candidates are respectively associated with each other, and
   the processor is configured to:
      further generate control information that causes the selector to be notified of candidate information, which is information about a candidate who is associated with an operation performed on the operation device by the selector, via the operation device.
(((10))) The information processing system according to (((9))),
   wherein the candidate information is displayed on a display unit of the operation device, and
   the processor is configured to:
      further generate control information that causes a display on a non-display portion, which is a portion other than a display portion of the display unit on which the candidate information is displayed, to be changed each time the candidate information that the selector is notified of via the display unit is made different.
(((11))) The information processing system according to (((10))),
   wherein the processor is configured to:
   generate, as the control information that causes the display on the non-display portion to be changed, control information that causes a background color of the non-display portion to be changed.
(((12))) An operation device that is configured such that each of a plurality of candidates who possibly make an utterance is selectable and that is used in a case where a selector selects an utterer, the operation device comprising:
   a processor configured to:
   acquire operation information of the operation device that is operated in a case where the selector selects the utterer from among the plurality of candidates; and
   specify the utterer from among the plurality of candidates based on the operation information.
(((13))) The operation device according to (((12))),
   wherein the processor is configured to:
   acquire, as the operation information, operation information of an operation of changing an orientation of the operation device or operation information of an operation of changing an orientation of a movable portion provided at the operation device.
(((14))) The operation device according to (((12))) or (((13))),
   wherein operations that are performed on the operation device by the selector and the candidates are respectively associated with each other, and
   the processor is configured to:
      further generate control information that causes the selector to be notified of candidate information, which is information about a candidate who is associated with an operation performed on the operation device by the selector, via the operation device.
(((15))) A program causing a computer to realize:
   an acquiring function of acquiring operation information of an operation device that is configured such that each of a plurality of candidates who possibly make an utterance is selectable and that is operated by a selector in a case where the selector selects an utterer from among the plurality of candidates;
   a specifying function of specifying the utterer from among the plurality of candidates based on the operation information; and
   an associating function of associating the specified utterer with an utterance that is made in a case where the operation device is operated by the selector.
(((16))) A program that is executed by a computer provided in an operation device that is configured such that each of a plurality of candidates who possibly make an utterance is selectable and that is used in a case where a selector selects an utterer, the program causing the computer to realize:
   an acquiring function of acquiring operation information of the operation device that is operated by a selector in a case where the selector selects an utterer from among the plurality of candidates; and
   a specifying function of specifying the utterer from among the plurality of candidates based on the operation information.

With the information processing system according to (((1))), it is possible to increase the precision of an association between an utterance and an utterer associated with the utterance in comparison with a case where each of a plurality of candidates who possibly make an utterance operates an operation device of himself or herself to make a declaration for the utterance himself or herself.

With the information processing system according to (((2))), it is possible to associate an utterer with an utterance based on an operation that is performed on the operation device of which the orientation can be changed at least partially.

With the information processing system according to (((3))), it is possible to associate an utterer with an utterance based on the information registered in advance in the storage unit.

With the information processing system according to (((4))), it is possible to increase the precision of an association between an utterance and an utterer associated with the utterance in comparison with a case where information about the orientation of the operation device or the orientation of the movable portion in a case where the movement speed thereof is higher than a predetermined movement speed is acquired as the orientation information.

With the information processing system according to (((5))), in a case where an operation of causing the operation device or the movable portion to perform rotation around the vertical axis is performed on the operation device or the movable portion, another utterer different from an utterer specified before the rotation can be specified.

With the information processing system according to (((6))), in a case where an operation of causing the operation device or the movable portion to perform rotation around the horizontal axis is performed on the operation device or the movable portion, another utterer who is positioned closer to the operation device or the movable portion than an utterer specified before the rotation is or another utterer who is positioned farther from the operation device or the movable portion than an utterer specified before the rotation is can be specified.

With the information processing system according to (((7))), in a case where an operation of causing the operation device or the movable portion to perform rotation around the horizontal axis is performed on the operation device or the movable portion, another utterer who is positioned above or below an utterer specified before the rotation can be specified.

With the information processing system according to (((8))), it is possible to associate an utterer with an utterance based on an operation performed on the operation device that includes the buttons provided to respectively correspond to the plurality of candidates.

With the information processing system according to (((9))), it is possible to notify the selector of information about a candidate who is specified based on an operation that is performed on the operation device by the selector.

With the information processing system according to (((10))), in comparison with a case where only a display regarding the candidate information is changed, it is possible to more clearly notify the selector of a change in information that the selector is notified of.

With the information processing system according to (((11))), in comparison with a case where the background color of the non-display portion is not changed, it is possible to more clearly notify the selector of a change in information that the selector is notified of.

With the operation device according to (((12))), it is possible to increase the precision of an association between an utterance and an utterer associated with the utterance in comparison with a case where each of a plurality of candidates who possibly make an utterance operates an operation device of himself or herself to make a declaration for the utterance himself or herself.

With the operation device according to (((13))), it is possible to associate an utterer with an utterance based on an operation that is performed on the operation device of which the orientation can be changed at least partially.

With the operation device according to (((14))), it is possible to notify the selector of information about a candidate who is specified based on an operation that is performed on the operation device by the selector.

With the program according to (((15))), it is possible to increase the precision of an association between an utterance and an utterer associated with the utterance in comparison with a case where each of a plurality of candidates who possibly make an utterance operates an operation device of himself or herself to make a declaration for the utterance himself or herself.

With the program according to (((16))), it is possible to increase the precision of an association between an utterance and an utterer associated with the utterance in comparison with a case where each of a plurality of candidates who possibly make an utterance operates an operation device of himself or herself to make a declaration for the utterance himself or herself.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

1: information processing system
11a: CPU
31a: CPU
41: target person
42: nearby person
43: selector
51: button
92: vertical axis
93: horizontal axis
95: movable portion
300: operation device
312: storage unit
314: display unit

## Claims

1. An information processing system comprising:
a processor configured to:
acquire operation information of an operation device that is configured such that each of a plurality of candidates who possibly make an utterance is selectable and that is operated by a selector in a case where the selector selects an utterer from among the plurality of candidates;
specify the utterer from among the plurality of candidates based on the acquired operation information; and
associate the specified utterer with an utterance that is made in a case where the operation device is operated by the selector.

2. The information processing system according to claim 1, wherein the processor is configured to:
acquire, as the operation information, orientation information which is information indicating an orientation of the operation device operated by the selector or an orientation of a movable portion provided at the operation device;
specify the utterer based on the orientation information; and
associate the specified utterer with an utterance that is made in a case where the operation device or the movable portion faces a direction specified by the orientation information used for the specification of the utterer.

3. The information processing system according to claim 2, further comprising:
a storage unit that stores orientations of the operation device or orientations of the movable portion in a state where the orientations are respectively associated with the candidates,
wherein the processor is configured to:
specify the utterer based on the orientation specified by the acquired orientation information and information stored in the storage unit.

4. The information processing system according to claim 2 or 3,
wherein the processor is configured to:
acquire, as the orientation information, information about the orientation of the operation device or the orientation of the movable portion in a case where a movement speed of the operation device or the movable portion is lower than a predetermined movement speed.

5. The information processing system according to any one of claims 2 to 4,
wherein the processor is configured to:
specify another utterer whose position in a direction around a vertical axis is different from a position of the utterer, in a case where the operation device or the movable portion is rotated around the vertical axis and the orientation of the operation device or the movable portion is changed after the utterer is specified.

6. The information processing system according to any one of claims 2 to 5,
wherein the processor is configured to:
specify another utterer who is positioned closer to the operation device or the movable portion than the utterer is or another utterer who is positioned farther from the operation device or the movable portion than the utterer is, in a case where the operation device or the movable portion is rotated around a horizontal axis and the orientation of the operation device or the movable portion is changed after the utterer is specified.

7. The information processing system according to any one of claims 2 to 5,
wherein the processor is configured to:
specify another utterer who is positioned above or below the utterer, in a case where the operation device or the movable portion is rotated around a horizontal axis and the orientation of the operation device or the movable portion is changed after the utterer is specified.

8. The information processing system according to claim 1,
wherein the processor is configured to:
acquire, as the operation information, information about an operation of making a selection from buttons that respectively correspond to the plurality of candidates and that are provided at the operation device;
specify the utterer based on a selected button which is a button selected from among a plurality of buttons by the selector; and
associate the specified utterer with an utterance that is made in a case where the selected button is selected by the selector.

9. The information processing system according to any one of claims 1 to 8,
wherein operations that are performed on the operation device by the selector and the candidates are respectively associated with each other, and
the processor is configured to:
further generate control information that causes the selector to be notified of candidate information, which is information about a candidate who is associated with an operation performed on the operation device by the selector, via the operation device.

10. The information processing system according to claim 9,
wherein the candidate information is displayed on a display unit of the operation device, and
the processor is configured to:
further generate control information that causes a display on a non-display portion, which is a portion other than a display portion of the display unit on which the candidate information is displayed, to be changed each time the candidate information that the selector is notified of via the display unit is made different.

11. The information processing system according to claim 10,
wherein the processor is configured to:
generate, as the control information that causes the display on the non-display portion to be changed, control information that causes a background color of the non-display portion to be changed.

12. An operation device that is configured such that each of a plurality of candidates who possibly make an utterance is selectable and that is used in a case where a selector selects an utterer, the operation device comprising:
a processor configured to:
acquire operation information of the operation device that is operated in a case where the selector selects the utterer from among the plurality of candidates; and
specify the utterer from among the plurality of candidates based on the operation information.

13. The operation device according to claim 12,
wherein the processor is configured to:
acquire, as the operation information, operation information of an operation of changing an orientation of the operation device or operation information of an operation of changing an orientation of a movable portion provided at the operation device.

14. The operation device according to claim 12 or 13,
wherein operations that are performed on the operation device by the selector and the candidates are respectively associated with each other, and
the processor is configured to:
further generate control information that causes the selector to be notified of candidate information, which is information about a candidate who is associated with an operation performed on the operation device by the selector, via the operation device.

15. A program causing a computer to realize:
an acquiring function of acquiring operation information of an operation device that is configured such that each of a plurality of candidates who possibly make an utterance is selectable and that is operated by a selector in a case where the selector selects an utterer from among the plurality of candidates;
a specifying function of specifying the utterer from among the plurality of candidates based on the operation information; and
an associating function of associating the specified utterer with an utterance that is made in a case where the operation device is operated by the selector.

16. A program that is executed by a computer provided in an operation device that is configured such that each of a plurality of candidates who possibly make an utterance is selectable and that is used in a case where a selector selects an utterer, the program causing the computer to realize:
an acquiring function of acquiring operation information of the operation device that is operated by a selector in a case where the selector selects an utterer from among the plurality of candidates; and
a specifying function of specifying the utterer from among the plurality of candidates based on the operation information.
